# EUROPEAN PATENT SPECIFICATION

(11) **EP 2 266 897 B1**
(45) Date of publication and mention of the grant of the patent: **06.05.2015**
(21) Application number: 09725230.8
(22) Date of filing: 18.03.2009
(51) Int. Cl.: B65G 17/06, B09B 3/00, B65F 5/00, B65G 15/44, F23G 5/44, B65G 45/14

(54) **WASTE TREATING SYSTEM WITH A WASTE CONVEYOR**
ABFALLBEHANDLUNGSSYSTEM MIT EINEM ABFALLFÖRDERER
SYSTÈME DE TRAITEMENT DE DÉCHETS COMPRENANT UN TRANSPORTEUR DE DÉCHETS

(30) Priority: 24.03.2008 JP 2008075447
(43) Date of publication of application: 29.12.2010
(73) Proprietor: Kobelco Eco-solutions Co., Ltd., Kobe-shi, Hyogo 651-0072 (JP)
(72) Inventor: MINAKAWA, Koji, Kobe-shi Hyogo 651-0072 (JP); KUROSE, Takuji, Kobe-shi Hyogo 651-0072 (JP); KUROOKA, Tatsuo, Kobe-shi Hyogo 651-0072 (JP); TANAKA, Shinsuke, Kobe-shi Hyogo 651-0072 (JP)
(74) Representative: Müller-Boré & Partner Patentanwälte PartG mbB
(86) International application number: PCT/JP2009/055277
(87) International publication number: WO 2009/119406

(56) References cited:
- EP-A1- 0 175 407
- DE-U1- 20 218 133
- JP-A- 2002 013 879
- JP-A- 2003 165 604
- JP-A- 2006 275 443
- JP-U- 53 025 085
- JP-U- 55 162 538
- JP-U- 61 078 113
- JP-U- 63 071 113
- JP-U- 63 084 021
- US-A- 3 509 987
- US-A- 4 645 065
- US-A- 4 718 541
- US-A1- 2006 118 389

## Description

### TECHNICAL FIELD

The present invention relates to a waste treatment system equipped with a waste conveyor.

### BACKGROUND ART

A waste treatment system for subjecting waste such as refuse to a pyrolytic treatment comprises, in addition to a waste treatment furnace, a waste feed section for pretreating the waste and feeding the pretreated waste to the waste treatment furnace, and a gas treatment section for cooling gas discharged from the waste treatment furnace and collecting dust therein.

The waste feed section includes a crusher adapted to crush waste, and a waste feeder unit adapted to feed the crushed waste into the waste treatment furnace. Furthermore, for positioning the crusher low, there is often installed a waste conveyor adapted to convey waste crushed by the crusher upwardly to a position above a waste input port of the waste treatment furnace (or a position above an inlet of the waste feeder unit when the waste feeder unit is provided).

There has been known a conveyor described in the Patent Document JP 10-19225 A, as the waste conveyor, for example. The outline thereof is shown in FIG. 6.

The conveyor 90 shown therein comprises a conveyor belt 92 installed so as to extend obliquely upwardly, and a plurality of support plates 94 erected on the conveyor belt 92. The support plates 94 are spaced in a conveyance direction of the conveyor belt 92 while each of them continuously extending widthwise of the conveyor 90 (that is, extending in a direction perpendicular to the conveyance direction). In this conveyor 90, the conveyor belt 92 is fed upwardly to scoop up waste such as refuse so as to hold it between an upper surface of the conveyor belt 92 and a front surface of each of the support plates 94, thus conveying it upwardly.

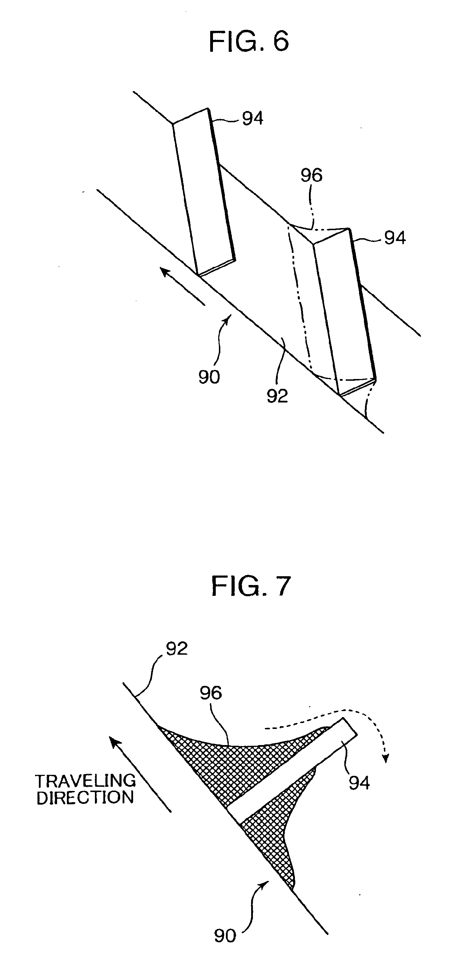

The waste thus conveyed by the conveyor 90, such as garbage (wet refuse), generally contains a lot of water, which is likely to cause sludge-like waste having high viscosity, so-called slag 96, to adhere to the conveyor 90. Moreover, the slag 96 is likely to accumulate in a pocket region between the upper surface of the conveyor belt 92 and the front surface of the support plate 94 as shown in FIG. 7, which hinders a function of the support plate 94, i.e., a function of scooping and holding waste. This is likely to cause the conveyed waste to drop from the support plate 94, i.e., flow back (dashed line with arrowhead in FIG. 7). Thus reversely flowed waste may entrap following waste to grow in a large block in a snowballing effect, and the block may excessively increase a load of the conveyor to thereby cause a defective movement of the conveyor.

In order to cope with the above situation or prevent the situation from occurring, the conveyor must be stopped to allow an operation of removing the accumulated slag 96 to be performed, which significantly lowers a treatment efficiency of the entire system.

US 4 718 541 A discloses a tobacco feeder for elevating bulk tobacco from a lower level input station to a higher level discharge station including a hopper conveyor and a feed conveyor each having a plurality of abutting conveyor slats movable with drive chains along a horizontal run and an inclined run, respectively. The conveyor slats include a planar top surface and integral forward and rearward legs bent at an included angle of less than 90° but greater than 0° with respect to the top surface forming convexly arcuate longitudinal edges. In order to stiffen the conveyor slats, a reinforcing slat is preferably mounted to each conveyor slat, and provides a slat assembly which has pronounced resistance to bending. Alternatively, a roller is mounted beneath the conveyor slat which is movable along a support to prevent bending of the conveyor slats, or a partial reinforcing slat is provided for riding on an elongated support.

JP 53 025085 U discloses a transporting device wherein in a transporting direction of a conveyor, mounting bars for mounting transporting lugs are arranged at a specified pitch, wherein transporting lug bodies, each comprising a bar-shaped base with rubber lugs with a metallic core protruding at a specified pitch therefrom, are mounted on the mounting bars.

US 2006 0118389 A1 discloses a module for a spiked conveyor belt and a spiked conveyor belt made from these modules, the modules being made of a flexible material and having a substantially flat first surface from which a plurality of space pins protrude; one end of each pin extends from the first surface at an angle of about 60° to the surface; the other end of the pin is mounted in a rib formed on a second surface of the module, the second surface also providing means for hinging the modules together.

US 3 509 987 A discloses a slat conveyor assembly in which metallic slats are interconnected by plastic flexible hinges co-extensive in length with the slats. The slats have a central bore extending longitudinally therethrough and have open ended keyhole-shaped edge grooves extending longitudinally therealong to receive projecting key portions of the flexible hinges. The conveyor is adapted to travel between guide flanges on the head and tail rolls or oppositely disposed guide rails extending along the sides of the conveyor, and bumper elements are provided on each slat to retain the slats and hinges assembled arid to slide against the associated guide member. The slats of the apron may provide a smooth supporting surface, a notched feeding surface, or a spiked feed surface.

### DISCLOSURE OF THE INVENTION

It is an object of the present invention to provide a waste treatment system with a waste conveyor capable of effectively suppressing adhesion of so-called slag to maintain adequate continuous conveyance of waste for a long period of time, and a waste treatment system equipped with the waste conveyor. The waste conveyor is one designed to be provided in a waste treatment system including a crusher for crushing waste and a waste treatment furnace for treating the crushed waste, to convey the waste crushed by the crusher upwardly to a position above a waste input port of the waste treatment furnace. This waste conveyor comprises: a conveyor belt installed in an upwardly inclined posture, and a plurality of support sections erected on the conveyor belt and spaced in a conveyance direction of the conveyor belt to support waste on the conveyor belt from therebelow. Each of the support sections includes a plurality of support poles spaced in a width direction perpendicular to the conveyance direction at a pitch greater than a width of each of the support poles.

The waste treatment system according to the present invention comprises a crusher adapted to crush waste, a waste treatment furnace adapted to subject the crushed waste to a combustion treatment, and the above-mentioned waste conveyor. The waste conveyor is so disposed as to convey the waste crushed by the crusher upwardly to a position above a waste input port of the waste treatment furnace.

### BRIEF DESCRIPTION OF THE DRAWINGS

FIG. 1 is a diagram showing an overall structure of a waste treatment system according to one embodiment of the present invention.
FIG. 2 is a diagram showing a structure of a waste feed section in the waste treatment system.
FIG. 3 is a top plan view showing a substantial part of a waste conveyor in the waste feed section.
FIG. 4 is a side view showing the substantial part of the waste conveyor.
FIG. 5 is a sectional front view showing the substantial part of the waste conveyor.
FIG. 6 is a perspective view showing a substantial part of a conventional waste conveyor.
FIG. 7 is a side view showing an accumulation state of slag in the conventional waste conveyor.

### BEST MODE FOR CARRYING OUT THE INVENTION

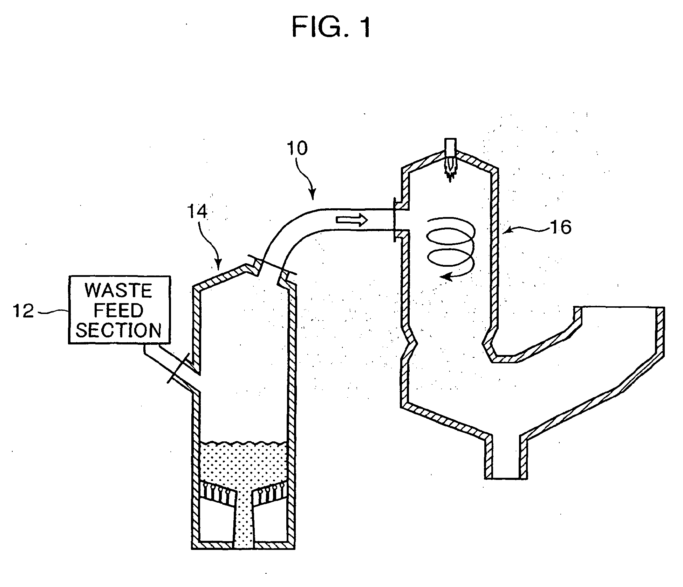

FIG. 1 shows a substantial part of a waste treatment system according to one embodiment of the present invention. This system comprises a waste treatment furnace 10, a waste feed section 12 for pretreating waste, such as waste including garbage, and feeding the pretreated waste to the waste treatment furnace, and a gas treatment section, which is not graphically expressed , for treating gas discharged from the waste treatment furnace 10.

The waste treatment furnace 10 according to this embodiment is a gasification and melting furnace, which comprises a gasification furnace 14 and a melting furnace 16. In the gasification furnace 14, there is performed a pyrolysis of the waste fed from the waste feed section 12 to thereby produce pyrolysis gas. As the gasification furnace 14, for example, may be used a fluidized-bed furnace illustrated in FIG. 1, or other commonly-known furnace such as a kiln furnace. In the melting furnace 16, there is performed a high temperature combustion of a combustible component in the pyrolysis gas, involving melting an ash content of the pyrolysis gas into slag. High-temperature gas discharged from the melting furnace 16 is cooled in a waste heat boiler and a cooling tower included in the gas discharge section, and then discharged from an exhaust flue to an outside of the system through a dust collector and an induced draft fan.

The waste treatment furnace in the present invention is not limited to the gasification and melting furnace. It may be, for example, a waste incinerator or a waste melting furnace.

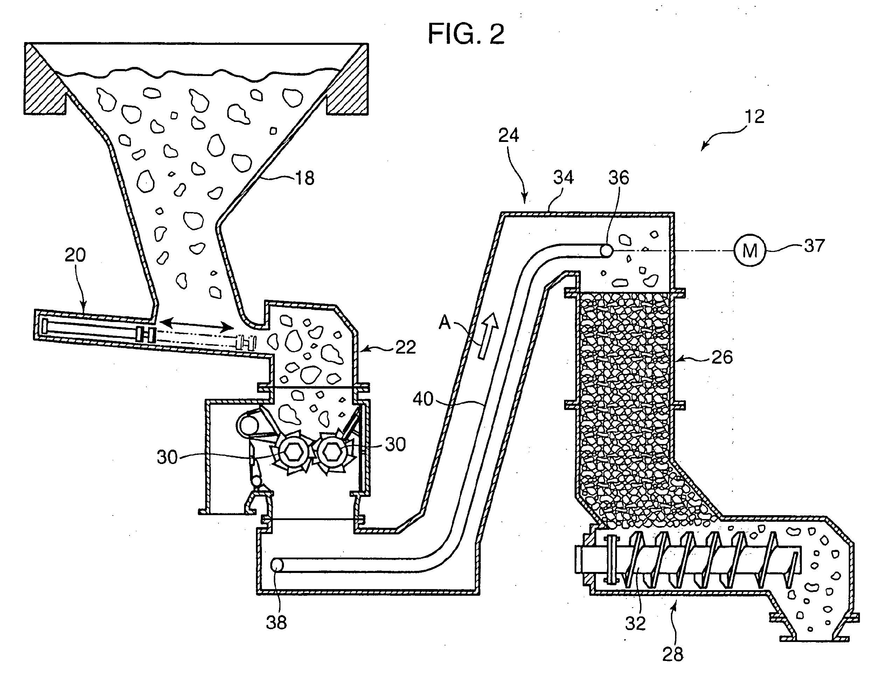

As shown in FIG. 2, the waste feed section 12 comprises a waste hopper 18, a pusher 20, a crusher 22, a waste conveyor 24 according to the present invention, a material seal unit 26, and a waste feeder unit 28. The waste hopper 18 is adapted to receive therein waste including garbage and allow the waste to drop from a bottom thereof. The waste is pushed into an inlet of the crusher 22 by the pusher 20. The crusher 22 is provided with a pair of rotary crushers 30 and adapted to crush the waste dropping through between the crushers 30, to a given post-crush diameter.

The waste conveyor 24 is adapted to convey the crushed waste discharged from an outlet of the crusher 22 at a lower end thereof, upwardly to a position of an upper end of the material seal unit 26. The position where the conveyance finishes off is above a waste input port of the gasification furnace 14 and further, in this embodiment, above a waste inlet of the waste feeder unit 28.

The material seal unit 26 is formed of a pipe vertically extending between an outlet of the waste conveyor 24 and the waste inlet of the waste feeder unit 28. The material seal unit 26 allows the crushed waste to be piled up therein, to thereby enhance the gas-tightness of the gasification furnace 41.

The waste feeder unit 28 incorporates a screw conveyor 32 to feed waste falling from the material seal unit 26 to the waste input port of the gasification furnace 14.

As to the waste treatment system according to the present invention, the waste feed section 12 including the waste conveyor 24 is not limited to a specific structure. For example, the outlet of the waste conveyor 24 may be directly connected to the waste input port of the gasification furnace 14 through a pipe.

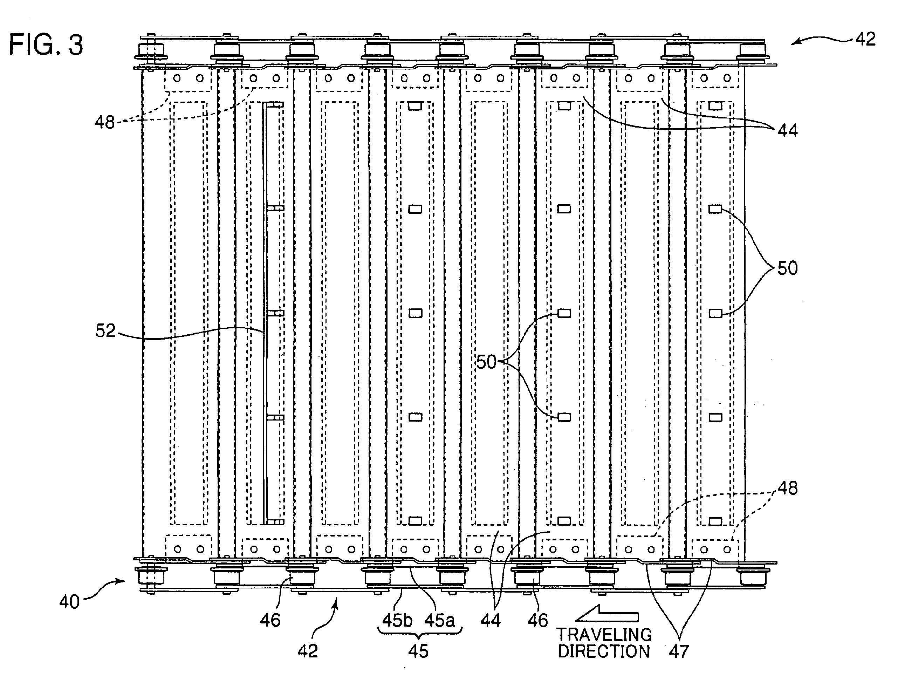

Next will be described a specific structure of the waste conveyor 24, additionally referring to FIGS. 3 to 5.

The waste conveyor 24 comprises, as shown in FIG. 2, a hollow-shaped casing 34 extending from the lower end of the crusher 22 to the upper end of the material seal unit 26, and a conveyor body housed in the casing 34. The conveyor body comprises a driving shaft 36 located just above the material seal unit 26, a driven shaft 38 located below the crusher 22, and a conveyor belt 40 around and between the driving shaft 36 and the driven shaft 38. The conveyor belt 40 is kept in a shape along a shape of the casing 34, i.e., in a shape extending obliquely upwardly from a position just below the crusher 22 to a position just above the material seal 26. The driving shaft 36 is coupled to a motor 37, which rotationally drives the driving shaft 36 to thereby drive an upper region of the conveyor belt 40 in an upward conveyance direction (a direction of the arrow A in FIG. 2).

As shown in FIGS. 3 to 5, the conveyor belt 40 includes a pair of right and left chains 42, and a plurality of plate-shaped aprons 44 each connecting the chains 42 to each other in a width direction (a direction perpendicular to the conveyance direction), the aprons 44 arranged along the conveyance direction with no space therebetween. Each of the chains 42 is formed of a plurality of links 45 arranged in a longitudinal direction thereof. Each of the links 45 has an inner link plate 45a and an outer link plate 45b disposed in parallel relation to each other. Adjacent ones of the links 45 are mutually and pivotably connected by a pin 46, while right and left ends of each of the aprons 44 are connected to respective ones of the right and left inner link plates 45a via brackets 48 respectively. The chains 42 are so meshed with not graphically expressed sprockets fixed to the driving shaft 36 and the driven shaft 38 respectively as to be driven in the conveyance direction according to the rotation of the driving shaft 36.

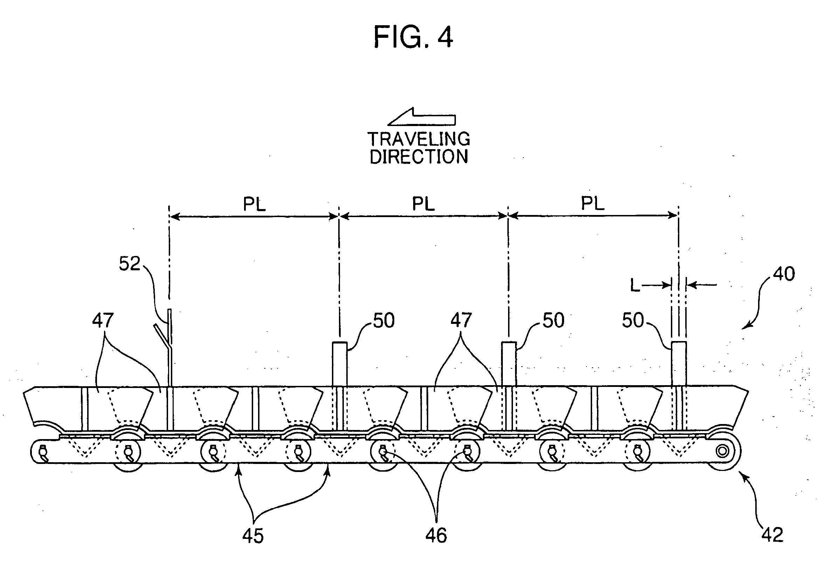

On the conveyor belt 40, a plurality of support sections for supporting the waste from underside thereof are erected and spaced in the conveyance direction. As a feature of the waste conveyor 24, each of the support sections is formed of a plurality of support poles 50, which are erected on the aprons 44 arranged in the conveyance direction. In this embodiment, alternate ones of the aprons 44 are selected as ones on which the support poles 50 are erected respectively. This means that a pitch PL (FIG. 4) between adjacent ones of the support poles 50 in the conveyance direction is equal to twice a center-to-center pitch between adjacent ones of the aprons 44.

The support poles 50 forming each of the support section are spaced widthwise of the conveyor at a predetermined pitch (a widthwise pitch PW) on each of the above selected aprons 44. In this embodiment, five of the support poles 50 are aligned in a widthwise row, erected at a center position widthwise of the apron 44, two positions adjacent to respective opposite ends thereof, and two positions between the center position and respective ones of the positions adjacent to the opposite ends, respectively.

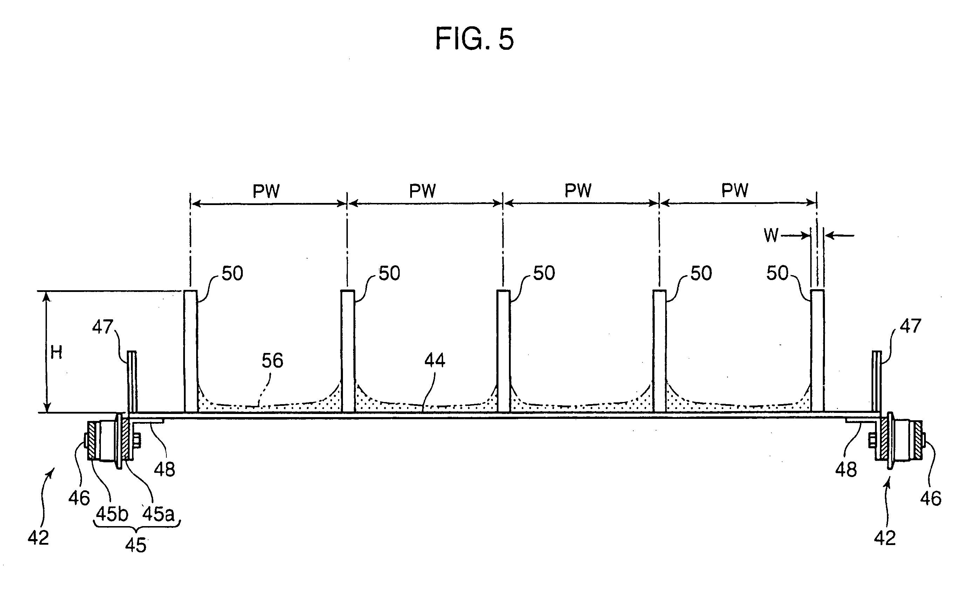

Each of the support poles 50 is formed in a prism of rectangular plane cross-section. In the plane cross-section, a length dimension L (FIG. 4) which is a dimension in the conveyance direction is greater than a width W (FIG. 5), and each of the widthwise pitch PW between adjacent ones of the support poles 50 and a height dimension H (FIG. 5) of each of the support poles 50 are thoroughly greater than the width W. Leaving such a large widthwise pitch PW is useful in suppressing after-mentioned slag accumulation, and setting the height dimension H to a large value as described above results in an increase in an amount of waste to be conveyed by the waste conveyor 24.

In the present invention, the number of the support poles 50 and a specific value of the widthwise pitch PW may be appropriately set. Besides, the arrangement of the support poles 50 is not limited to the straight-line arrangement in the widthwise direction, but may be an arrangement, for example, in which widthwise adjacent ones of the support poles 50 are mutually offset in the conveyance direction (i.e., arranged in a zigzag or staggered manner).

In this embodiment, on a specific apron 44 more limitedly selected among the selected aprons 44, a plate-shaped scraper 52 is erected, in place of the support poles 50. As shown in FIG. 3, the scraper 52 continuously extends widthwise of the conveyor to play a roll of scraping waste residing on an inner side of the casing 34.

Furthermore, on each of the right and left ends of the aprons 44 is erected a blocking plate 47, which prevents waste on the aprons 44 from dropping out of the aprons 44 widthwise of the conveyor.

Next will be described an operation of the waste conveyor 24.

While the conveyor belt 40 is driven in the conveyance direction, crushed waste is fed from the lower end of the crusher 22 onto the conveyor belt 40. The waste is conveyed obliquely upwardly while being supported from underside thereof by the support poles 50 erected on the conveyor belt 40, and then drops from a terminal end (upper end) of the conveyor belt 40 to be received in the material seal unit 26.

During the conveyance, water contained in the waste (e.g., water in garbage) causes so-called slag which is a semisolid substance having slight fluidity, which adheres onto surfaces of the aprons 44 of the conveyor belt 40 and the support poles 50. As to the conventional conveyor 90 shown in FIG. 6 and FIG. 7, i.e., a conveyor having support sections each formed of a support plate 94 continuously extending widthwise direction of the conveyor, the slag is liable to accumulate in a region between the front surface of the support plate 94 and the upper surface of the conveyor belt 92, which can cause significant deterioration in conveyance ability of the conveyor 90. In contrast, on the conveyor belt 40 in this embodiment, a slag accumulation rate is significantly low even if adhesion of the slag occurs, because each of the erected support poles 50 has a small width W and there exists a sufficient pitch (widthwise pitch PW) between adjacent ones of the support poles 50. This allows the waste conveyor 24 to maintain adequate conveyance for a long period of time.

The widthwise pitch PW can be appropriately set depending on a post-crush diameter of waste crushed by the crusher 22. Since pieces of the crushed waste are intertwined with each other when actually conveyed, even if the post-crush diameter is relatively small, for example, even if the widthwise pitch PW is equal to or slightly greater than the post-crush diameter, the crushed waste can be conveyed and the conveyance efficiency will be little lowered. For example, the widthwise pitch PW can be set in the range of 100 to 250 mm.

On the other hand, though slag is likely to accumulate on a side surface of the scraper 52 erected on the conveyer belt 40 separately from the support poles 50, the conveyance ability of the waste conveyor 24 is sufficiently ensured by the support poles 50.

In the present invention, the length dimension L of each of the support poles 50 is greater than the width W. This dimension setting makes it possible to give each of the support poles enough strength to withstand a weight of waste being conveyed while reducing the width W to suppress slag accumulation. The width W of the support pole may be set, for example, in the range of 10 to 30 mm. The height dimension H may be set, for example, in the range of 100 to 200 mm.

Waste to be treated in the present invention is not limited to one including garbage. For example, the present invention may be applied to a treatment of industrial waste.

### EXAMPLE

A test was carried out for an inventive example corresponding to the waste conveyor 24 illustrated in FIGS. 2 to 5, and a comparative example corresponding to a conveyor having a support plate continuously extending widthwise thereof, in place of the plurality of support poles 50 of the waste conveyor 24. Contents of the test are as follows.

### 1. Data of Inventive Example

Width of apron 44: 949 mm
Shape of support pole 50: width W = 16 mm; length dimension L = 25 mm; height H = 150 mm
Arrangement of support poles 50: widthwise pitch PW = 200 mm; pitch PL in conveyance direction = 300 mm

### 2. Data of Comparative Example

Width of apron 44: 949 mm (common to inventive example)
Shape of support plate: width = 800 mm; length dimension (thickness) = 25 mm; height H = 150 mm
Pitch of support plates in conveyance direction = 300 mm

### 3. Test Results

### (1) Frequency of trouble occurrence

In the comparative example, just after one week from start of feeding of waste, slag accumulation occurred at a level causing conveyance troubles. The conveyance troubles herein include defective movement of the conveyor and clogging in the crusher 22.

In the inventive example, even after one week from start of feeding of waste, almost no slag adhesion on the support poles 50 occurred. Moreover, just after two and a half months from the start of feeding of waste, observed was a little slag adhesion on the upper surface of the aprons 44 and base ends of the support poles 50 as shown in FIG. 5 by the chain double-dashed line; so much slag accumulation as to hinder conveyance was not observed. This teaches that no maintenance for removing slag is required just after continuous conveyance for about three months from start of a treatment operation.

### (2) Conveyance Efficiency

As to conveyance efficiency, little difference was verified between the inventive example and the comparative example.

As above-mentioned, the present invention provides a waste treatment system equipped with a waste conveyor capable of effectively suppressing slag adhesion to maintain adequate continuous conveyance of waste for a long period of time.

Specifically, a waste conveyor of the waste treatment system according to the present invention is designed to convey waste crushed by the crusher upwardly to a position above a waste input port of the waste treatment furnace. The waste conveyor comprises a conveyor belt installed in an upwardly inclined posture and a plurality of support sections erected on the conveyor belt and spaced in a conveyance direction of the conveyor belt to support waste on the conveyor belt from underside thereof. Each of the support sections includes a plurality of support poles which are spaced in a width direction perpendicular to the conveyance direction at a pitch greater than a width of each of the support poles.

In this waste conveyor, the sufficient widthwise pitch (which is a pitch greater than at least the width of the support pole) between adjacent ones of the support poles erected on the conveyor belt makes it possible to significantly suppress adhesion of so-called slag to a pocket region between the support pole and an upper surface of the conveyor belt, thereby allowing the waste crushed by the crusher to be well conveyed upwardly for a long period of time.

Although the waste is crushed into pieces having a certain level of particle size by the crusher, the crushed waste can be conveyed in spite of the large pitch between adjacent ones of the support poles because the pieces of the crushed waste are actually intertwined with each other. Therefore, to suppress slag adhesion, small width of each of the support poles is preferable. On the other hand, if a dimension of each of the support ports in the conveyance direction is greater than the width of the support pole, it is possible to ensure strength enough to withstand a weight of waste being conveyed, in each of the support poles. Furthermore, setting a height dimension of each of the support poles to a value greater than the width of the support pole makes it possible to ensure a sufficient conveyance amount while reducing the width.

The present invention is not intended to exclude an embodiment in which a member other than the support poles is erected on the conveyor belt. For example, in a waste conveyor comprising a casing which accommodates the conveyor belt, may be erected a scraper, which extends in the width direction to scrape waste residing on an inner side of the casing, on the conveyor belt between specific ones of the support poles adjacent to one another in the conveyance direction. Although this scraper is one on which slag may accumulate in an early stage, the accumulation, even if it occurs, will not significantly hinder the function of scraping waste on the inner side of the casing. Meanwhile, the presence of the support poles ensures a conveyance function of the conveyor.

## Claims

1. A waste treatment system comprising:
a crusher (22) adapted to crush waste;
a waste treatment furnace (10) adapted to subject the crushed waste to a combustion treatment; and
a waste conveyor (24) to convey waste crushed by the crusher (22) upwardly to a position above a waste input port of the waste treatment furnace (10), the waste conveyor (24) comprising:
a conveyor belt (40) installed in an upwardly inclined posture; and
a plurality of support sections erected on the conveyor belt (40) and spaced in a conveyance direction of the conveyor belt (40) to support waste on the conveyor belt (40) from underside thereof, each of the support sections including a plurality of support poles (50) spaced in a width direction perpendicular to the conveyance direction at a pitch greater than a width of each of the support poles (50), wherein a dimension (L) of each of the support poles (50) in the conveyance direction is greater than the width (W) of the support pole (50), and
wherein each of the support poles (50) is formed in a prism of rectangular plane cross-section having a dimension (L) in the conveyance direction greater than a width (W) thereof.

2. The waste treatment system as defined in claim 1, wherein a height dimension (H) of each of the support poles (50) is greater than the width (W) of the support pole (50).

3. The waste treatment system as defined in claim 1 or 2, which further comprises:
a casing (34) which accommodates the conveyor belt (40); and
a scraper (52) erected on the conveyor belt (40) between specific ones of the support poles (50) adjacent to each other in the conveyance direction, the scraper (52) extending in the width direction to scrape waste residing on an inner side of the casing (34).

## Patentansprüche

1. Abfallbehandlungs- bzw. -aufbereitungssystem, umfassend:
einen Zerkleinerer (22), der angepasst ist, Abfall zu zerkleinern;
einen Abfallbehandlungs- bzw. -aufbereitungsofen (10), der angepasst ist, den zerkleinerten Abfall einer Verbrennungsbehandlung auszusetzen; und
einen Abfallförderer (24), der von dem Zerkleinerer (22) zerkleinerten Abfall nach oben zu einer Position über einer Abfalleingangsöffnung des Abfallbehandlungsofens (10) befördert, wobei der Abfallförderer (24) umfasst:
ein Förderband (40), das in einer nach oben geneigten Haltung installiert ist; und
eine Mehrzahl von Stütz- bzw. Trägerabschnitten, die an bzw. auf dem Förderband (40) errichtet sind und in einer Förderrichtung des Förderbands (40) beabstandet sind, um Abfall auf dem Förderband (40) von dessen Unterseite zu stützen bzw. zu tragen, wobei jeder der Stütz- bzw. Trägerabschnitte eine Mehrzahl von Stütz- bzw. Trägerstangen (50) enthält, die in einer Breitenrichtung senkrecht zu der Förderrichtung in einem Abstand größer als eine Breite jeder der Stütz- bzw. Trägerstangen (50) beabstandet sind, wobei eine Abmessung (L) jeder der Stütz- bzw. Trägerstangen (50) in der Förderrichtung größer ist als die Breite (W) der Stütz- bzw. Trägerstangen (50), und
wobei jede der Stütz- bzw. Trägerstangen (50) in einem Prisma von Rechtekkige-Ebene-Querschnitt gebildet ist, und zwar mit einer Abmessung (L) in der Förderrichtung, die größer ist als eine Breite (W) davon.

2. Abfallbehandlungssystem nach Anspruch 1, wobei eine Höhenabmessung (H) jeder der Trägerstangen (50) größer ist als die Breite (W) der Trägerstange (50).

3. Abfallbehandlungssystem nach Anspruch 1 oder 2, das ferner umfasst:
ein Gehäuse (34), welches das Förderband (40) aufnimmt bzw. unterbringt; und
einen Räumer bzw. Abstreicher (52), der an bzw. auf dem Förderband (40) zwischen Spezifischen der Trägerstangen (50) angrenzend an bzw. benachbart zueinander in der Förderrichtung errichtet ist, wobei sich der Abstreicher (52) in der Breitenrichtung erstreckt, um Abfall abzustreichen, der sich auf einer Innenseite des Gehäuses (34) befindet.

## Revendications

1. Système de traitement de déchets comprenant :
un broyeur (22) adapté à broyer des déchets ;
un four de traitement de déchets (10) adapté à soumettre les déchets broyés à un traitement de combustion ; et
un transporteur de déchets (24) pour transporter les déchets broyés par le broyeur (22) vers le haut vers une position au-dessus d'un orifice d'entrée de déchets du four de traitement de déchets (10), le transporteur de déchets (24) comprenant :
une courroie transporteuse (40) installée dans une posture inclinée vers le haut ; et
une pluralité de sections de support érigées sur la courroie transporteuse (40) et espacées dans une direction de transport de la courroie transporteuse (40) pour supporter des déchets sur la courroie transporteuse (40) depuis le côté inférieur de celle-ci, chacune des sections de support incluant une pluralité de pôles de support (50) espacés dans un sens de la largeur perpendiculaire à la direction de transport à un pas supérieur à une largeur de chacun des pôles de support (50), dans lequel une dimension (L) de chacun des pôles de support (50) dans la direction de transport est supérieure à la largeur (w) du pôle de support (50), et dans lequel chacun des pôles de support (50) est formé dans un prisme de section transversale plane rectangulaire ayant une dimension (L) dans la direction de transport supérieure à une largeur (w) de celui-ci.

2. Système de traitement de déchets selon la revendication 1, dans lequel une dimension de hauteur (H) de chacun des pôles de support (50) est supérieure à la largeur (w) du pôle de support (50).

3. Système de traitement de déchets selon la revendication 1 ou 2, qui comprend en outre :
un logement (34) qui héberge la courroie transporteuse (40) ; et
un racloir (52) érigé sur la courroie transporteuse (40) entre des pôles spécifiques des pôles de support (50) adjacents les uns aux autres dans la direction de transport, le racloir (52) s'étendant dans le sens de la largeur pour racler des déchets résidant sur un côté interne du logement (34).
